# EUROPEAN PATENT APPLICATION

(11) **EP 1 917 864 A1**
(43) Date of publication of application: **07.05.2008**
(21) Application number: 06123303.7
(22) Date of filing: 01.11.2006
(51) Int. Cl.: A23F 5/40, A23C 11/00

(54) **Soluble foaming beverage powder**

(71) Applicant: Nestec S.A., 1800 Vevey (CH)
(72) Inventor: Wyss, Christophe Alexander, 1007 LAUSANNE (CH); Gumy, Jean-Claude, 1433 SUCHY (CH); Warnery, Philippe, François, 1400 YVERDON-LES-BAINS (CH); Bourgeois, Thierry, 1350 ORBE (CH)
(74) Representative: Schuller, Cornelis

(57) **Abstract**

The present invention relates to a composition comprising a mixture of a soluble foamer ingredient and a soluble beverage or foodstuffs ingredient having a retarded solubility.

The soluble foamer ingredient upon addition of a liquid induces the formation of or forms a foam this is achieved by an ingredient comprising a matrix and a gas under pressure.

The soluble beverage or foodstuffs ingredient, which may be in the form of a powder is prepared in such a way that the solubility is retarded. Upon addition of a liquid the foamer and the beverage or foodstuff are separated before being dissolved resulting in a nice and neat physical separation in two layers, which is best visible if the colour of the foamer and beverage or foodstuffs powder are different.

The present invention more specifically relates to a soluble cappuccino powder, which upon reconstitution results in a beverage with a large amount of white foam. The soluble cappuccino powder of the present invention delivers upon reconstitution a white foam comparable in colour and height and texture to a real cappuccino froth made up by steaming fresh milk and spooning the foam on top of a freshly extracted espresso.

## Description

### Field of the invention

The present invention relates to a soluble beverage powder, more specifically to a foaming soluble beverage powder. The invention relates to a mixture of a soluble foamer ingredient and a soluble beverage or foodstuffs ingredient. The soluble foamer ingredient upon addition of a liquid induces the formation of or forms a foam this is achieved by an ingredient comprising a matrix and a gas under pressure or releasing gas chemically when in contact with water. The soluble beverage or foodstuffs ingredient, which may be in the form of a powder is prepared in such a way that the solubility is retarded. Upon addition of a liquid the foamer and the beverage or foodstuff are separated before being dissolved resulting in a nice and neat physical separation in two layers, which is best visible if the colour of the foamer and beverage or foodstuffs powder are different.
The present invention more specifically relates to a soluble cappuccino powder, which upon reconstitution results in a beverage with a large amount of white foam. The soluble cappuccino powder of the present invention delivers upon reconstitution a white foam comparable in colour and height to a real cappuccino froth made up by steaming fresh milk and spooning the foam on top of a freshly extracted espresso.
The soluble cappuccino powder comprises a mixture of ingredients wherein one ingredient releases gas upon addition of liquid and the second ingredient is a coffee of retarded solubility.

### Background of the invention

Soluble foamer or creamer powders which, upon addition of a liquid, are able to provide a creamy foam have many uses. For example, these creamer powders may be used to provide milk shakes and cappuccino beverages. They may also have food applications such as in desserts, soups, and sauces.
Soluble coffee beverage products (such as powders), which produce cappuccino beverages are particularly well known. Usually these products are a dry mix of a soluble coffee powder and a soluble beverage creamer. The soluble beverage creamer contains pockets of gas which, upon dissolution of the powder, produce foam. Therefore, upon the addition of water or milk (usually hot), a whitened coffee beverage, which has a foam on its upper surface, is formed; the beverage resembling, to a greater or lesser extent, traditional Italian cappuccino. Examples of these gassed soluble beverage creamers are described in European patent applications; No 0 154 192, 0 458 310 and 0 885 566. Soluble beverage creamers which contain inorganic foaming agents instead of entrapped gas are also available.
Ideally, to closely resemble a traditional Italian cappuccino, a light, fluffy, spooneable and stable foam should form on the surface of the beverage. However, quite often the foam produced by many soluble cappuccino powders is not light, fluffy and spooneable. Further, the amount of foam produced is often much less than that ordinarily found on a traditional cappuccino. The amount of foam may, to some extent, be increased by increasing the amount of soluble beverage creamer in the coffee beverage product. However this negatively influences the flavour balance of the beverage which is not always desirable.

In general, several methods exist to make a soluble coffee beverage delivering a "milk-type" foam layer upon reconstitution. Among these methods the following three deserve some further mentioning.

The first method, which is often used relates to porous coffee whitener containing gas at atmospheric pressure. Examples are found in the following patent publications US 4,438,147 (Foaming creamer and method of making same), AU 645566 (Powdered foaming coffee whitener, process and apparatus for producing same and powdered mixture for making coffee beverages), US 4,746,527 (Drink composition), DE 60020291 (Cappuccino creamer with improved foaming characteristics), and EP 1 064 850 (Foaming cappuccino creamer containing gasified carbohydrate).
This first method comprises products, which upon reconstitution deliver a slowly forming relatively small layer of foam on top of the beverage.

The second method relates to the use of chemical foaming systems. Examples of this method are found in the following patent publications, DE 4407361 (Milk powder-free cappuccino coffee drink mixture) and EP 0 796 562 (Foaming coffee creamer and instant hot cappuccino).
This second group represents a technology, which is not commonly used in the industry. The addition of chemical gassing ingredients can, but does not necessarily have to lead to unpleasant taste deviations in the final beverage. In addition these type of products may be perceived by the consumer as too chemical.

The third method makes use of a foamer ingredient consisting of a porous carbohydrate matrix containing gas under pressure. Examples of this method are found in the following patent publications, WO 01/08504 (Foaming ingredient and powders containing it), WO 2006/023565 (Non-carbohydrate foaming compositions and methods of making the same) and WO 2006/023564 (Non-protein foaming composition and methods of making the same).
The third group particularly WO 01/08504 delivers a fast developing, high amount of foam of a nice milk foam type dense and spooneable texture.

These three approaches lead to different results. However, they have one thing in common; all three technologies lead to foam with a color dependent on the color of the liquid part. WO 01/08504 (Foaming ingredient and powders containing it), describes that the soluble foamer ingredient, or the mixture of it and the soluble beverage or foodstuffs ingredient may also be used in milk-shake powders, soup powders, sauce powders.

If the beverage or foodstuffs ingredient is a coffee powder then the color will depend on the amount of coffee;
higher amount of coffee → darker foam color
lower amount of coffee → lighter foam color

The color of the foam (especially the whiteness) is a strong differentiation of the soluble beverage compared to a cappuccino product based on a fresh coffee and freshly steamed milk (coffee shop type product).

A further patent, EP 0 888 066 B1, describes a process of making a soluble cappuccino powder, which upon addition of a liquid forms a coffee beverage having a frothy, white foam surface. This patent combines the use of a porous coffee whitener containing gas under atmospheric pressure and a coffee of delayed solubility.
The approach shown in said patent leads to measurably whiter foam than competitor products or products made with porous coffee whitener containing gas under pressure and a normal coffee of not delayed solubility. Nevertheless the achievable whiteness of the foam is far from being close to the color of a real milk froth layer produced by steaming milk and spooning the froth on top of the liquid.
Especially, at high coffee concentrations the foam tends to take a darker color.

Therefore, there exists a need for a soluble cappuccino powder, which upon reconstitution not only gives a relatively high amount of foam, but also a white foam. To summarize: a product, which upon reconstitution looks like a real cappuccino.

### Summary of the Invention

The present invention relates to a soluble beverage powder, specifically to a foaming soluble beverage powder.
More specifically, the present invention relates to a composition comprising a mixture of a soluble foamer ingredient and a soluble beverage or foodstuffs ingredient having a retarded solubility.
The soluble foamer ingredient upon addition of a liquid induces the formation of or forms a foam this is achieved by an ingredient comprising a matrix and a gas under pressure. Alternatively, the gas formation may be due to the presence of specific chemical ingredients.
The soluble beverage or foodstuffs ingredient, which may be in the form of a powder is prepared in such a way that the solubility is retarded. Upon addition of a liquid the foamer and the beverage or foodstuff are separated before being dissolved resulting in a nice and neat physical separation in two layers, which is best visible if the colour of the foamer and beverage or foodstuffs powder are different.
The present invention more specifically relates to a soluble cappuccino powder, which upon reconstitution results in a beverage with a large amount of white foam. The soluble cappuccino powder of the present invention delivers upon reconstitution a white foam comparable in colour and height and texture to a real cappuccino froth made up by steaming fresh milk and spooning the foam on top of a freshly extracted espresso. The soluble cappuccino powder comprises a mixture of ingredients wherein one ingredient releases gas upon addition of liquid and the second ingredient is a coffee of retarded solubility.
It is another aspect of the invention that the combination of coffee with retarded solubility, a foamer ingredient containing gas under pressure (or chemically producing gas) and a ungassed coffee whitener (and optionally sugar, flavors thickeners or other ingredients) in a dry mix allows to obtain a cappuccino type, soluble coffee beverage which upon reconstitution with water (optionally other liquids, i.e. milk) leads to a very much milk froth like foam layer.
In another aspect the invention relates to the use of a mixture of a soluble foamer ingredient and a soluble beverage or foodstuffs ingredient having a retarded solubility for the preparation of a cappuccino type of beverage.
In yet another aspect of the invention the product of the present invention comes close to a real cappuccino in two aspect i.e. the color and the thickness of the foam layer in addition the separation of the color between the foam and the liquid is improved.
In yet another aspect of the invention the product of the present invention comes close to a real cappuccino in respect to foam texture.

### Detailed description of the invention

Embodiments of the invention are now described by way of example only. This invention provides a soluble foamer ingredient which is able to generate large amounts of gas per unit weight in combination with a beverage or foodstuffs ingredient having retarded solubility. The soluble foamer ingredient may be used in soluble foamer powders to produce increased amounts of foam when the foamer powder is reconstituted with liquid. The retarded solubility of the beverage or foodstuffs ingredient results in the foam getting formed whereas the beverage or foodstuffs ingredient is not yet dissolved. The foam is therefore formed on the basis of the existing liquid color and it is only after the foam is formed that the color of the liquid is changing due to the dissolution of the beverage or foodstuffs ingredient. In the following description the invention will be described with reference to a soluble creamer ingredient, which is one of the preferred applications of the present invention. It will however be appreciated that the invention also may have other applications such as beverages, desserts, sauces, soups etc.
An example of a suitable foamer ingredient is the soluble ingredient which has been described in International patent application WO 01/08504. This patent application discloses a soluble foamer ingredient which is primarily a matrix containing carbohydrate, protein and entrapped gas. The carbohydrate in the matrix may be any suitable carbohydrate or carbohydrate mixture. Suitable examples include lactose, dextrose, fructose, sucrose, maltodextrin, corn syrup, starch, modified starch, cyclodextrin, dextrose, fructose, and the like, and mixtures of these carbohydrates. Mixtures containing maltodextrin are particularly preferred. For example, the carbohydrate may be a mixture of about 40% to about 80% by weight of maltodextrin, sucrose and lactose. Sucrose preferably provides about 5% to about 30% by weight of the mixture. Lactose preferably provides about 5% to about 30% by weight of the mixture. Maltodextrin preferably provides 10% to 50% by weight of the mixture. The carbohydrate preferably provides about 40% to about 98%; more preferably about 60% to about 95% by weight of the matrix; and even more preferably about 70% to about 90% by weight.
The protein in the matrix may be any suitable protein or protein mixture. The protein can be replaced by another ingredient with a similar functionality such as suitable emulsifiers. Suitable emulsifiers include monoglycerides, diglycerides, lecithin, diacetyl tartaric acid esters of mono-diglycerides (data esters), emulsifying starches and mixtures thereof. Suitable examples of protein include milk proteins (casein or whey, or both), soy proteins, wheat proteins, gelatin, caseinates, and the like. A particularly suitable source of protein is non-fat milk solids. These solids may be provided in dry or liquid form (as skimmed milk). Another suitable source of protein is sweet whey, for example in the form of sweet whey powder. Sweet whey powder usually contains a mixture of lactose and whey protein. If the protein is provided by protein source such as non-fat milk solids or sweet whey, the protein source will usually also provide some carbohydrate in the form of lactose.
It is also possible to file a response without having to contact the accusing party and this is generally treated by the energy. Note also that the licensed party is interested party will be supporting to him.
The matrix may contain fat as an ingredient. The fat in the matrix may be any suitable fat or fat mixture. Suitable examples include milk fat, vegetable fat and animal fat. The origin of the fat, its composition and its physical characteristics such as melting or crystallisation temperatures may influence both the foaming capacity of the soluble foamer ingredient and the stability of the foam obtained
A gas is entrapped in the matrix. The gas may be any suitable food grade gas. For example, the gas may be nitrogen, carbon dioxide or air, and mixtures of these gases. Gases which are substantially inert are preferred. To provide the enhanced foaming, the gas is introduced into the matrix under pressure; for example at above about 100 kPa gauge. Preferably, the gas is introduced into the matrix at above about 500 kPa gauge; for example at about 1 MPa to about 20 MPa.
The gas may be introduced into the matrix by any suitable process. One suitable technique involves providing the matrix in the form of expanded particles and then entrapping gas in the particles. The expanded particles may be produced by injecting a gas into an aqueous matrix concentrate having a solids content above about 30% by weight and then spray drying the concentrate to powder. The gas may be injected into the aqueous matrix concentrate at a pressure of about 500 kPa to about 5 MPa. However, the pressure at which the gas is injected into the matrix concentrate is not critical. The gassed aqueous matrix is then spray dried to powder. The particles are then subjected to an inert gas atmosphere at high pressure and at a temperature above the glass transition temperature of the particles. The pressure may be from about 100 kPa gauge to about 20 MPa gauge. The temperature needed will depend upon the composition of the particles since this will influence the glass transition temperature. However, the temperature may be readily set for any particle type by the skilled person. Temperatures more than about 50°C above the glass transition temperature are probably best avoided. The particles may be subjected to the pressure and temperature for as long as desired since increasing the time will generally increase the gas entrapment. Usually times of about 10 seconds to about 30 minutes are sufficient. The particles are then subjected to rapid quenching or curing to ensure entrapment of the gas. Rapidly releasing the pressure may well be sufficient to quench the particles. Otherwise suitable cooling procedures may be used.

Another suitable technique involves injecting gas into a molten mass of the matrix which contains little or no moisture; for example in an extruder. The gas may be injected at a pressure of about 100 kPa gauge to about 20 MPa gauge. The temperature required will depend upon the composition of the matrix since this will influence the melt temperature. However, the temperature may be readily set for any matrix by the skilled person. Generally, however, temperatures above about 150°C should be avoided. The molten mass may then be extruded through a small orifice and comminuted into a powder. Depending upon the rapidity of solidification of the matrix, the matrix may need to be cured or quenched under pressure before being formed into a powder. This will prevent the gas from escaping from the matrix. The curing or quenching is preferably carried out rapidly but the time may vary from about 10 seconds to about 90 minutes.
In the context of the present document the amount of gas being released from the foamer ingredient is measured after the addition of liquid to the foamer ingredient. A method for measuring the gas release is given in the mentioned International patent application (WO 01/ 08504). Other methods may also be suitable. Particularly, there is another approach, for generating the desired gas, in principle this is basically a method based on a critical timing point. Probably there is enough work to be done and there is no clear guidance. I would still think that the type of agreements considered herein, are between the plaintiff and the fines you will have to pay. In general these other methods relate to the use of chemical ingredients.
Other types of matrices containing gas under pressure have been described in other patent application. International patent application WO 2006/023565 discloses non-carbohydrate foaming compositions and methods of making the same and WO 2006/023564 non-protein foaming composition and methods of making the same. These patent applications describe the use of matrices as described in WO 01/08504 except that these matrices either contain no carbohydrate and are based on protein or they contain no protein and are based on carbohydrate.
If desired, the soluble foamer ingredient such as the creamer ingredient may contain other components such as artificial sweeteners, emulsifiers, stabilisers, thickeners, flowing agents, colours, flavours, aromas, and the like. Suitable artificial sweeteners include saccharin, cyclamates, acetosulfame, L-aspartyl based sweeteners such as aspartame, and mixtures of these. Suitable emulsifiers include monoglycerides, diglycerides, lecithin, diacetyl tartaric acid esters of mono-diglycerides (data esters), emulsifying starches and mixtures thereof. Suitable stabilisers include dipotassium phosphate and sodium citrate. A suitable flowing agent is sodium silica aluminate.

The second ingredient of the mixture of the present invention is a beverage or foodstuffs powder having retarded solubility at desired temperature of reconstitution. The solubility of the soluble coffee powder is preferably delayed for at least about 2 seconds compared to a standard soluble coffee (50% dissolution at 100rpm) ; more preferably for at least about 3 seconds. For example, the soluble coffee powder may be delayed for about 2 to 10 seconds. Even more preferably, the solubility of the coffee powder is delayed such that the soluble whitener powder and the soluble foamer ingredient dissolve at least as quickly as the soluble coffee powder.
Preferably, the soluble coffee powder comprises soluble coffee particles coated by a coating agent which reduces the water solubility of the soluble coffee particles. The coating agent is preferably a carbohydrate (for example sucrose, fructose, maltose, dextrose, maltodextrin, lactose, coffee solids, pectin, xanthan gum and starch), a protein (for example milk solids, or gelatin) or an edible fat (for example lecithin or edible vegetable fats such as coconut fat). Carbohydrate and mixtures thereof are particularly preferred as coating agents.
In a particularly preferred embodiment, the soluble coffee particles are coated by a panning process, adding the carbohydrate as syrup and/or fine powder and successively drying the product.
Preferably, the soluble coffee solids dissolve in water at about 85°C after about 2 seconds or more (time measured after immersion for 50% dissolution with a mechanical agitation at 100rpm). In particular, it is preferred if 50% of the soluble coffee solids dissolve in about 3 seconds to about 10 seconds.

Specific examples are now described to further illustrate the invention.

### Examples

### Example 1 (Comparative example)

A standard agglomerated coffee is coated in a panning process. 1 kg of coffee is placed in a rotating drum as used for production of confectionary. On the mass of coffee is sprayed some maltodextrin (DE12) as syrup of 50% dry matter and added as dry powder as it is commonly done for confectionary coating. The coated particles are then dried with hot air directly within the rotating drum and have a final composition of approximately 1 part coffee, 0.4 parts of maltodextrin and a total moisture of (4.09 %).

This coffee has a retarded solubility by 3 seconds compared to a standard agglomerated coffee (Time measured after immersion for 50% of total dissolution. The test is done in distilled water at 85°C. The final concentration was fixed at 1.7 % TS. The sample was agitated mechanically at 100 rpm).

This coffee with retarded solubility was then mixed with a commercially used coffee whitener containing gas for foaming at different final concentrations (as described in the patent EP 0 88 066 B1). The resulting beverages were reconstituted and the whiteness of the foams was measured by the method described below. Table1 contains the obtained foam heights and whiteness degrees and measurement of the gas released upon mixing with water.

**Table 1: Foam whiteness measurement for cappuccino beverages based on standard foaming creamer. The first three examples (marked with *) are enriched in skimmed milk powder delivering a stronger whiteness to the liquid and the foam.**

| Total solids | Coffee concentration (liquid) | Foam height mm | Whiteness degree foam | Color contrast | Gas release ml/g |
|---|---|---|---|---|---|
| 8% * | 0.6% | 6 | 82.6 | 28.4 | 0.0 |
| 9% * | 1.1 % | 6 | 75.2 | 30.1 | 0.2 |
| 10% * | 1.8% | 6 | 69.3 | 29.6 | 0.1 |
| 7% | 0.6% | 6 | 80.6 | 32.4 | 0.0 |
| 8% | 1.1% | 6 | 74.8 | 35.5 | 0.0 |
| 8% | 1.8% | 6 | 69.3 | 34.2 | 0.2 |

The products obtained by this method do not release any gas upon reconstitution. The whiteness degree of the foam depends very much on the whiteness degree of the liquid. At high coffee concentrations the liquid and the foam tend to get darker. Therefore the color contrast does not change significantly from one coffee concentration to the other.

### Example 2

The coffee with retarded solubility as described in example 1 was mixed together with a full milk powder (used here as a non foaming coffee creamer) and different amounts of foaming ingredient as described in patent (WO 01/08504) in order to obtain a range of mixes delivering upon reconstitution cappuccino beverages with different foam heights and different coffee concentration. The resulting foam heights and foam whiteness degrees are given in Table 2.
It is surprising that even at lower foam height the foam of the products of example 2 are significantly whiter than the products of example 1 (at equal coffee concentration and particularly pronounced at high coffee concentration).
Increasing the foam height of the beverage can even increase the foam whiteness. At high foam levels whiteness degrees are very close to the ones of a reference cappuccino (example 3) can be achieved.

**Table 2: Foam whiteness measurement for cappuccino beverages based on foamer ingredient releasing gas upon reconstitution. The whiteness degree of the foam depends much less on the whiteness degree of the liquid than example 1. This is shown by a strong increase in color contrast when moving from low coffee concentrations to high coffee concentrations.**

| Total solids | Coffee concentration (liquid) | Foam height mm | Whiteness degree foam | Color contrast | Gas release ml/g |
|---|---|---|---|---|---|
| 8% | 0.6% | 4 | 85.1 | 29.7 | 0.9 |
| 9% | 1.1% | 4 | 80.3 | 33.6 | 0.8 |
| 9% | 1.8% | 4 | 78.5 | 38.3 | 0.7 |
| 8% | 0.6% | 8 | 86.4 | 30.1 | 1.4 |
| 9% | 1.1% | 8 | 84.5 | 37.8 | 1.5 |
| 10% | 1.8% | 8 | 81.9 | 40.7 | 1.2 |
| 8% | 0.6% | 13 | 88.8 | 32.4 | 2.1 |
| 9% | 1.1% | 13 | 85.4 | 37.4 | 2.0 |
| 10% | 1.8% | 13 | 83.3 | 40.9 | 1.9 |

### Example 3

Steaming 75 ml of half fat milk on a steam nozzle of a Nespresso® coffee machine produces a reference cappuccino foam. The so generated milk froth is then spooned on top of 75ml of Nespresso coffee extracted from a capsule. The remaining liquid milk is poured in the beverage.
The resulting foam height and whiteness degree was measured and is given in table 3.

**Table 3: Foam whiteness measurement for a reference cappuccino beverage. The foam is of a very strong whiteness contrasting strongly with the color of the liquid.**

| Total solids | Coffee concentration (liquid) | Foam height mm | Whiteness degree foam | Color contrast |
|---|---|---|---|---|
| 7% | 1.5% | 21 | 89.2 | 41.4 |

### Example 4

The foam height and the foam whiteness of four commercial soluble cappuccinos were measured. Results are given in table 4.

**Table 4: Foam whiteness measurement of commercial cappuccino beverages. The liquid and foam color depends strongly on the coffee content of the beverage. Only very low color contrasts can be observed.**

| Commercial name | Total solids | Coffee concentration (liquid) | Foam height mm | Whiteness degree foam | Color contrast | Gas release ml/g |
|---|---|---|---|---|---|---|
| SAINSBURY CAPPUCCINO UK | 9% | 1.4% | 7 | 55.3 | 18.9 | 0.3 |
| NESCAFE FAMILY CAPPUCCINO GERMANY | 9% | 0.3% | 4 | 67.3 | 15.0 | 0.1 |
| JACOBS FAMILY CAPPUCCINO GERMANY | 9% | N/A | 4 | 57.1 | 16.8 | 0.3 |
| NESCAFE CAPPUCCINO FRANCE | 9% | 1.2% | 9 | 65.4 | 21.1 | >1.2 |

### Example 5

### Foam colour measurement.

The beverage was reconstituted in a 250ml, 64mm diameter beaker according to a standardised procedure using mechanical agitation.
The foam was then delicately pierced with a straw close to the beaker's wall and de-ionised water was injected underneath the foam surface, in order to bring the level of the foam close to the rim of the beaker. The straw is delicately removed and the undisturbed portion of the foam surface is then measured from the top by reflectance measurement with an HunterLab ColorQuest 45/0 LAV instrument equipped with a 50.8mm diameter aperture. Measurements were performed in triplicate using a D65 CIE 1964 10 ° light source and 45/0 geometry. The instrument delivers L*, a* and b* values.

The WD (whiteness degree) was calculated based on the measured L*, a* and b* values and is expressed as [WD = 100-((100-L*)² + (a*² + b*²))^{0.5}] Pure white has a whiteness degree of 100.

For the measurement of the whiteness degree of the foam a standard deviation of 1.2 was established, thus a difference in WD of 3.4 can be considered as significantly different (95% confidence level).

### Liquid colour measurement:

The beverage was reconstituted in order to obtain a complete dissolution of the powder and then transferred to a 60 mm diameter optical cell.
The liquid colour was then measured through the bottom of the cell by reflectance measurement with an HunterLab ColorQuest 45/0 LAV instrument equipped with a 50.8mm diameter aperture. Measurements were performed in triplicate using a D65 CIE 1964 10 ° light source and 45/0 geometry.

The color contrast between foam and liquid is expressed as difference between the whiteness degree of the foam and the whiteness degree of the liquid.

### Example 6

### Measurement method for foam height:

The foam height was measured 30 seconds after reconstitution in a lab beaker (250ml; 64 mm diameter) using a specially designed measurement device allowing to compare the foam height in the middle of the beaker to the separation line liquid - foam.

### Example 7

### Measurement method of gas release, as described in WO 01/08504 A1

The amount of gas being released from the foamer ingredient is measured after the addition of liquid to the foamer ingredient. A method for measuring the gas release is given below. Other methods may also be suitable.
1) Provide: A glass vial and a rubber cap for sealing it; a glass column having in the one end a funnel and a needle attached there to and in the other end a suction ball; a water bath, and a syringe.
2) Weigh precisely 1 to 4 g of powder and introduce the powder into a 20 ml glass vial and hermetically seal with a rubber cap. Adjust the volume of water in the glass column with the suction ball to exactly 25 ml (or record exact volume V₀).
3) Introduce the vial in the water bath vertically under the funnel. Pierce the rubber cap with the needle fixed at the column base and allow the air in the head space of the glass vial to escape into the funnel and glass column. Record V₁ which represents the volume in the head space of the vial.
4) Take away the vial from the needle while maintaining the vial under the funnel in the water bath: Inject exactly 5 g of water into the vial with a syringe through the rubber cap. Pierce again the cap with the fixed needle until no more gas bubble escape from the needle and measure the gas released into the glass column (V₂).
5) Take away the vial and put the thumb on the cap. Take the vial out of the bath while keeping the thumb on to the cap. Shake the vial to ensure good dissolution. Put the vial back under the funnel in the water batch and pierce again. Record V₃. The total volume of released gas (in ml) is V₃-V₁-5. The gas release per gram of powder is obtained by dividing the total volume by the initial weigh of powder.

### Example 8

A standard agglomerated coffee is coated in a panning process. 1 kg of coffee is placed in a rotating drum as used for production of confectionary. On the mass of coffee is sprayed some modified starch (octenylsuccinated) as syrup of 30% dry matter and added as dry powder as it is commonly done for confectionary coating. The coated particles are then dried with hot air directly within the rotating drum and have a final composition of approximately 1 part coffee, 0.34 parts of modified starch and a total moisture of 8.42 %.

This coffee has a retarded solubility by 9 seconds compared to a standard agglomerated coffee (time measured after immersion for 50% of total dissolution, tested in distilled water at 85°C. The final concentration for the measurement was fixed at 1.7 %. The sample was agitated mechanically at 100 rpm).

This coffee with retarded solubility was mixed together with a full milk powder (used here as a non foaming coffee whitener) and different amounts of foaming ingredient as described in patent (WO 01/08504) in order to obtain mix delivering upon reconstitution a cappuccino beverages a foam height comparable to the reference cappuccino in foam color, texture and height (example 3) The resulting foam height and foam whiteness degrees are given in Table 5.

**Table 5: Foam whiteness measurement for a reference cappuccino beverage. The foam is of a very strong whiteness contrasting strongly with the color of the liquid. All the measured values are very close to the values measured for the reference cappuccino (example 3). This shows that the described invention is allowing mimicking the properties of a real cappuccino as a soluble beverage.**

| Total solids | Coffee concentration (liquid) | Foam height mm | Whiteness degree foam | Color contrast |
|---|---|---|---|---|
| 9% | 1.5% | 17 | 91.5 | 43.7 |

## Claims

1. A composition comprising the following ingredients
a) a foamer ingredient releasing gas upon reconstitution and
b) a beverage or foodstuffs powder /ingredient having retarded solubility.

2. A composition according to claim 1 wherein the foamer ingredient contains gas under pressure.

3. A composition according to claim 1 wherein the foamer ingredient forms a gas upon reaction of specific chemical ingredients.

4. A composition according to claim 1, 2 or 3 wherein the foamer ingredient releases the gas being present upon addition of liquid in an amount of at least about 1 ml of gas ambient conditions per gram of soluble foamer ingredient.

5. A composition according to claim 1, 2 or 3 wherein the beverage or foodstuffs ingredient having retarded solubility is a powder containing coffee.

6. A composition according to claim 5 wherein the powder containing coffee with retarded solubility is obtained by coating of a coffee with coffee solids, carbohydrates like starch, maltodextrins, sugars, sucrose, lactose, gums CMCs etc. proteins, fat, salts.

7. A composition according to claim 6 wherein the solubility of the powder containing coffee with retarded solubility is retarded by more than 2 seconds compared to a standard soluble coffee, retardation measured for 50% dissolution when stirred at 100rpm and for final 1.7 % total solids.

8. A composition according to claim 5 delivering white foam (WD > 70) and releasing gas (>0.5ml) upon addition of water.

9. A composition according to claim 5 delivering a strong color contrast between foam of water.and liquid (WD(Foam) - WD(Liquid))> 25 and releasing gas (>0.5ml/g) upon addition.

10. A composition according to claim 1, 2 or 3 wherein the soluble foamer ingredient forms 5% to 50% by weight of the powder.

11. A composition according to claim 1, 2 or 3 wherein the beverage or foodstuffs ingredient having retarded solubility is or contains a cocoa powder, fruit powder or another colored foodstuff powder.

12. A kit containing separately the ingredients to make up a product according to claim 1, 2 or 3.
